# EUROPÄISCHE PATENTANMELDUNG

(11) **EP 3 471 223 A1**
(43) Veröffentlichungstag der Anmeldung: **17.04.2019**
(21) Anmeldenummer: 18200088.5
(22) Anmeldetag: 12.10.2018
(51) Int. Cl.: H02G 1/10, H02G 1/08

(54) **MONTAGEWERKZEUG ZUM BEFESTIGEN UND/ODER LÖSEN EINES KABELZUGKOPFES AN BZW. VON EINEM ELEKTRISCHEN KABEL, INSBESONDERE SEEKABEL**

(30) Priorität: 16.10.2017 DE 102017124036
(71) Anmelder: NKT GmbH & Co. KG, 51061 Köln (DE)
(72) Erfinder: Wildermuth, Gregor, 51373 Leverkusen (DE)
(74) Vertreter: Feder Walter Ebert

(57) **Zusammenfassung**

Die vorliegende Erfindung betrifft ein Montagewerkzeug (1) zum Befestigen und/oder Lösen eines ein erstes Klemmelement (2) und ein zweites Klemmelement (3) aufweisenden Kabelzugkopfes (4) an bzw. von einem elektrischen Kabel (5), insbesondere einem Seekabel, wobei zwischen den Klemmelementen (2,3) ein Kabelteil (6), insbesondere eine Kabelarmierung (7), einklemmbar ist, wobei zum Einklemmen bzw. Entklemmen des Kabelteils (6), insbesondere der Kabelarmierung (7), die Klemmelemente (2,3) mittels eines Krafterzeugers (8) gegeneinander bewegbar sind. Die Erfindung betrifft ferner einen Kabelzugkopf (4) mit einem Montagewerkzeug (1) sowie ein Verfahren zum Befestigen und/oder Lösen eines Kabelzugkopfes (4) an bzw. von einem elektrischen Kabel (5).

## Beschreibung

Die vorliegende Erfindung betrifft ein Montagewerkzeug zum Befestigen und/ oder Lösen eines ein erstes Klemmelement und ein zweites Klemmelement aufweisenden Kabelzugkopfes an bzw. von einem elektrischen Kabel, insbesondere einem Seekabel, wobei zwischen den Klemmelementen ein Kabelteil, insbesondere eine Kabelarmierung, einklemmbar ist. Die Erfindung betrifft ferner einen Kabelzugkopf mit einem Montagewerkzeug sowie ein Verfahren zur Befestigung und/oder Lösen eines Kabelzugkopfes an bzw. von einem elektrischen Kabel, insbesondere von einem Seekabel.

Elektrische Kabel können neben vielen anderen Bereichen der Technik, u. a. auch als Energiekabel zur Übertragung elektrischer Energie im Mittelspannungs- und Hochspannungsbereich Anwendung finden. Entsprechende Kabel können dabei auf unterschiedlichste Weise ausgestaltet sein. So sind beispielsweise Anwendungen als Freileitungen, Erdkabel, Seekabel oder dergleichen denkbar. Entsprechende Kabel können je nach Bedarf eine Schirmung, Isolierungen oder Kabelarmierungen aufweisen.

Insbesondere Erdkabel oder Seekabel müssen aufgrund ihres Einsatzortes im Boden oder in einem Gewässer hohen Beanspruchungen Stand halten und wegen der technisch aufwändigen Wartung außerordentlich robust gebaut sein. Derartige elektrische Kabel weisen im Allgemeinen eine Kabelseele auf, welche von verschiedenen Leit- und Isolierschichten umgeben ist. Darüber hinaus kann eine die Kabelseele umgebende Kabelarmierung zum Schutz vorgesehen sein. Insbesondere bei Seekabeln dient die Kabelarmierung dazu, die Kabelseele beim Legen, Aufnehmen, Anlanden, Einpflügen oder dergleichen vor den gegebenen mechanischen Belastungen zu schützen.

Die Verlegung von elektrischen Kabeln erfolgt in der Regel mit Hilfe von Verlegeeinrichtungen oder -fahrzeugen, im Falle von Seekabeln im Allgemeinen durch spezielle Schiffe, sogenannten Kabellegern. Für den Verlegevorgang werden die Kabel bereits im Werk auf Kabeltrommeln gelegt und dann an den späteren Einsatzort transportiert. Zum Verlegen kann dann an dem Kabel gezogen werden, so dass es von der Kabeltrommel abrollt und auf diese Weise an dem jeweiligen Einsatzort verlegt wird.

Um geeignet an dem Kabel angreifen zu können, werden in der Regel sogenannte Kabelzugköpfe an dem Kabel befestigt. Mit Hilfe eines solchen Kabelzugkopfes kann dann das Kabel auf einfache Art und Weise verlegt werden. Der Kabelzugkopf kann dabei derart ausgestaltet sein, dass beispielsweise eine Winde oder ein anderes mechanisches Zugmittel an dem Zugkopf angreifen kann.

Kabelzugköpfe können je nach Bedarf auf unterschiedlichste Art und Weise ausgestaltet sein. Neben einer Reihe anderer Ausgestaltungen sind beispielsweise Zugköpfe bekannt, welche ein erstes Klemmelement und ein zweites Klemmelement aufweisen, wobei zwischen den Klemmelementen ein Kabelteil, insbesondere eine Kabelarmierung, einklemmbar ist. Auf diese Weise kann der Kabelzugkopf zuverlässig mit dem Kabelteil und insbesondere mit dem Kabel verbunden werden.

Bei bekannten Kabelzugköpfen erfolgt die Montage des Kabelzugkopfes an dem Kabel zumeist manuell. Hierzu können die Klemmelemente aufeinander aufgesteckt und dann mittels einer Schraubverbindung oder dergleichen gegeneinander festzogen werden. Derartige Kabelzugköpfe haben sich zwar in der Praxis durchaus bewährt. Allerdings hat es sich als nachteilig erwiesen, dass lediglich geringe Kräfte aufgebracht und dadurch bei einer solchen Befestigung nur geringe Zugkräfte auf dem Kabelzugkopf aufgebracht werden können, bevor sich die Klemmverbindung löst. Insbesondere bei Anwendungen, bei denen eine hohe Zugkraft über einen längeren Zeitraum erforderlich ist, kann eine zuverlässige Verbindung des Kabelzugkopfes mit dem Kabel nicht gewährleistet werden. Auf der anderen Seite kann sich auch das Lösen als schwierig erweisen.

Vor diesem Hintergrund stellt sich die Erfindung die **Aufgabe**, ein Montagewerkzeug anzugeben, mit welchem ausreichend hohe Kräfte auf die Klemmelemente aufgebracht werden, so dass nach der Befestigung der Klemmelemente auch hohe Zugkräfte über einen längeren Zeitraum aufgebracht werden können.

Bei einem Montagewerkzeug der eingangs genannten Art wird die Aufgabe dadurch **gelöst**, dass zum Einklemmen bzw. Entklemmen des Kabelteils, insbesondere der Kabelarmierung, die Klemmelemente mittels eines Krafterzeugers gegeneinander bewegbar sind.

Mit Hilfe eines Krafterzeugers können die beiden Klemmelemente des Kabelzugkopfes auf einfache Art und Weise gegeneinander bewegt, so dass es möglich ist, diese gegeneinander zu verspannen bzw. voneinander abzudrücken, ohne dass es erforderlich ist, beispielsweise manuelle Kräfte aufzubringen. Es ist daher insbesondere nicht mehr erforderlich, hohe Drehmomente aufzubringen, um so die benötigten Kräfte für die Klemmverbindung bereitstellen zu können. Auf diese Weise kann ein fester Sitz des Kabelzugkopfes an dem Kabel erreicht werden. Mit einem Montagewerkzeug mit einem solchen Krafterzeuger können ausreichend hohe Kräfte auf die Klemmelemente aufgebracht werden, so dass nach der Befestigung der Klemmelemente auch hohe Zugkräfte über einen längeren Zeitraum aufgebracht werden können.

Eine in diesem Zusammenhang vorteilhafte Ausgestaltung sieht vor, dass zum Befestigen eine Vorspannkraft bzw. zum Lösen eine Abdrückkraft mittels des Krafterzeugers in die Klemmelemente einleitbar ist. Durch die Bewegung der beiden Klemmelemente gegeneinander kann eine Vorspannkraft bzw. eine Abdrückkraft eingeleitet werden, so dass die Klemmelemente des Kabelzugkopfes auf einfache Art und Weise gegeneinander verspannt und insbesondere gegeneinander geklemmt werden können. Insoweit ist es nicht erforderlich, beispielsweise bei der Befestigung eine Kraft über eine Schraubverbindung aufzubringen. Vielmehr ist es möglich, die beiden Klemmelemente gegeneinander vorspannen und dann bei Bedarf zu sichern. Während des Lösevorgangs ist es möglich, die beiden Klemmelemente durch das Einleiten einer Abdrückkraft wieder voneinander zu trennen, ohne dass diese beschädigt werden. Entsprechend hohe Kräfte sind bei einer manuellen Anwendung nicht aufbringbar.

Eine bevorzugte Ausgestaltung sieht ferner vor, dass der Krafterzeuger als hydraulischer oder pneumatischer Krafterzeuger, insbesondere als ein hydraulischer oder pneumatischer Zylinder, ausgebildet ist. Der Krafterzeuger kann bevorzugt derart ausgestaltet sein, dass dieser eine einfache steuerbare und gradlinige wirkende Kraft erzeugt. Als besonders vorteilhaft hat es sich erwiesen, wenn der Krafterzeuger als ein einfach wirkender Zylinder ausgebildet ist. Dies bedeutet, dass nur eine Kolbenseite, die mit einer Hydraulikflüssigkeit oder einem Luftdruck beaufschlagt wird, Arbeit in eine Richtung verübt. Die Rückbewegung erfolgt dann durch die Eigenmasse oder eine Fremdkraft, wie beispielsweise einer Feder. Alternativ sind jedoch auch Ausgestaltungen denkbar, bei welchen der Krafterzeuger als doppelt wirkender Zylinder ausgestaltet ist. Als besonders vorteilhaft hat sich dabei die Verwendung eines Hohlkolbenzylinders erwiesen. Ein automatischer bzw. motorischer Krafterzeuger bietet den Vorteil, dass die für die Klemmverbindung erforderlichen Kräfte und insbesondere die zum Befestigen erforderlichen Vorspannkräfte bzw. zum Lösen erforderlichen Abdrückkräfte ohne großen Aufwand auf die Klemmelemente aufgebracht werden können. Derart können Kräfte erzeugt werden, welche im Rahmen einer manuellen Tätigkeit nicht aufgebracht werden können.

Gemäß einer konstruktiven Ausgestaltung wird ein Verbindungselement, insbesondere zur lösbaren Verbindung des ersten Klemmelements mit dem Krafterzeuger, vorgeschlagen. Über das Verbindungselement kann die von dem Krafterzeuger erzeugte Vorspannkraft bzw. die Abdrückkraft auf das erste Klemmelement übertragen werden. Hierzu ist es bevorzugt, wenn das Verbindungselement kraft- und/oder formschlüssig mit dem ersten Klemmelement und/oder dem Krafterzeuger verbindbar. Als Verbindungen können dabei insbesondere Holzverbindungen, Schraubverbindungen oder dergleichen Einsatz finden. Dabei ist es von Vorteil, wenn der Krafterzeuger und/ oder das erste Klemmelement korrespondierend ausgestaltet sind, derart, dass eine Verbindung mit dem Verbindungselement hergestellt werden kann. In diesem Zusammenhang ist es besonders vorteilhaft, wenn das Verbindungselement eine Verbindungsmutter und/oder ein Zugelement aufweist. Über eine Verbindungsmutter kann das Verbindungselement auf einfache Art und Weise mit dem ersten Klemmelement verbunden werden. Das erste Klemmelement kann hierzu bevorzugt ein Gewinde aufweisen, mit welchem die Verbindungsmutter in Eingriff gelangen kann. Die Verbindungsmutter kann daher zur Verbindung des Krafterzeugers mit dem ersten Klemmelement auf das erste Klemmelement aufgeschraubt werden. Die Erfindung ist hierauf jedoch nicht beschränkt. Alternative Verbindungsarten sind ebenfalls denkbar. Als Zugelement hat sich die Verwendung einer Zugstange als besonders vorteilhaft erwiesen. Das Zugelement kann an der Verbindungsmutter oder dem ersten Klemmelement befestigt und insbesondere an diesen angeschraubt werden. Das andere Ende des Zugelements kann an dem Krafterzeuger befestigt werden. Auch hier hat sich eine Befestigung mittels einer Schraubverbindung als besonders vorteilhaft erwiesen.

In Weiterbildung der Erfindung ist ein Greifelement zum Greifen des zweiten Klemmelements vorgesehen. Mit Hilfe eines solchen Greifelements kann das zweite Klemmelement von der Außenseite her umgriffen und gehalten werden. Das Greifelement kann dabei insbesondere zur Einleitung der benötigten Vorspannkraft in das zweite Klemmelement dienen. Auf diese Weise kann das zweite Klemmelement in einer definierten Position relativ zum Krafterzeuger gehalten werden.

Besonders bevorzugt ist, wenn das Greifelement einen Ausleger und mindestens ein an dem Ausleger angeordnetes Greifteil aufweist. Dabei kann das Greifelement das zweite Klemmelement bevorzugt nach Art einer Klaue umgreifen. Der Ausleger kann insbesondere als eine Art Stützkonstruktion dienen, an dem das mindestens eine Greifteil befestigt werden kann. Das mindestens eine an dem Ausleger angeordnete Greifteil kann insbesondere entlang des Auslegers in radialer Richtung bewegt werden. Auf diese Weise ist es möglich, das Greifelement an eine beliebige Größe eines zweiten Klemmelements und somit insbesondere auch an einen beliebigen Außendurchmesser eines Kabels anzupassen. Auf diese Weise kann das Montagewerkzeug zusammen mit unterschiedlichsten elektrischen Kabeln verwendet werden. Es ist daher nicht mehr erforderlich, unterschiedliche Werkzeuge vorzusehen.

In diesem Zusammenhang ist es besonders bevorzugt, wenn der Ausleger eine im Wesentlichen sternförmige Geometrie aufweist. Es ist so auf einfache Art und Weise möglich, die Greifteile in radialer Richtung vom Krafterzeuger zu beabstanden. Insbesondere kann der Ausleger derart ausgestaltet sein, dass dieser sternförmig radial nach auswärts erstreckende Auslegerarme aufweist. Die Greifteile können dann bevorzugt an den Auslegerarmen angeordnet werden. Als vorteilhaft hat es sich erwiesen, wenn mindestens zwei Auslegerarme vorgesehen sind. Jedoch hat es sich als besonders vorteilhaft erwiesen, wenn der Ausleger drei Auslegerarme aufweist. Auf diese Weise kann eine stabile Konstruktion realisiert werden, welche jedoch gleichzeitig ein vergleichsweise geringes Gewicht aufweist. Auf diese Weise kann die Handhabung des Montagewerkzeugs vereinfacht werden.

Gemäß einer Ausgestaltung der Erfindung ist das mindestens eine Greifteil in radialer Richtung verschiebbar und/oder festlegbar an dem Ausleger angeordnet. Insbesondere kann das mindestens eine Greifteil verschiebbar und/ oder festlegbar an einem Auslegerarm des Auslegers angeordnet sein. Das Greifteil kann insbesondere nach Art eines länglichen Stabs ausgebildet sein und an dem dem Ausleger zugewandten Ende eine Einschuböffnung aufweisen, in welcher der Ausleger und insbesondere der Auslegerarm eingreifen können. Die Einschuböffnung kann dabei eine Form aufweisen, welcher der Form des Auslegers entspricht. Dabei ist es bevorzugt, wenn zwischen der Einschuböffnung und dem Ausleger nur ein geringes Spiel besteht. Zur Fixierung des Greifteils in radialer Richtung können an dem Greifteil Fixierelemente vorgesehen sein, mittels welchen sich der radiale Abstand der Greifteile von der Kabellängsachse festlegen lässt. Auf diese Weise kann das Montagewerkzeug an verschiedene Kabeldurchmesser angepasst werden. An dem Ausleger können Markierungen oder dergleichen vorgesehen sein, welche einen bestimmten Außendurchmesser eines Kabels indizieren. Die Greifteile können dann an diesen Markierungen ausgerichtet und fixiert werden. Die Greifteile können auf diese Weise gegen ein Verrutschen gesichert und somit ein fester Halt erreicht werden.

Weiter vorteilhaft ist, wenn das mindestens eine Greifteil einen Vorsprung aufweist, welcher während des Greifvorgangs in eine an dem zweiten Klemmelement vorgesehene Eingriffsöffnung eingreift. Auf diese Weise kann ein Verrutschen des Greifteils, insbesondere gegenüber dem zweiten Klemmelement, zuverlässig verhindert werden. Die Eingriffsöffnung kann bevorzugt nach Art eines Langlochs ausgebildet und im oberen dem Montagewerkzeug zugewandten Ende des zweiten Klemmelements angeordnet sein. Der Vorsprung kann eine zu der Eingriffsöffnung korrespondierende Form aufweisen und an der auslegerabgewandten Seite des Greifteils angeordnet sein. Durch die Wahl der Länge des Greifteils kann zusätzlich der Abstand in axialer Richtung zwischen dem Krafterzeuger und dem zweiten Klemmelement eingestellt werden. Zur zusätzlichen Sicherung des Greifelements gegen ein Verrutschen können insbesondere die einzelnen Greifteile zusätzlich gesichert werden. Hierzu kann beispielsweise eine Gurtsicherung oder dergleichen von außen um die Greifteile herumgelegt und gesichert werden. Als besonders vorteilhaft hat sich eine Spanngurtsicherung erwiesen. Auf diese Weise kann die Sicherheit bei der Nutzung des Montagewerkzeugs weiter erhöht werden.

Ferner ist es vorteilhaft, wenn das Greifelement an dem Verbindungselement anordbar ist. Auf diese Weise kann das Greifelement relativ zu dem Verbindungselement und/oder relativ zu dem Krafterzeuger ausgerichtet werden. Besonders bevorzugt ist dabei, wenn das Greifteil und insbesondere der Ausleger eine Durchführungsöffnung aufweist, durch welche das Verbindungselement und insbesondere das Zugelement hindurchsteckbar ist. Das Greifelement und das Verbindungselement sind auf diese Weise gegeneinander bewegbar. Die Durchführungsöffnung des Auslegers kann dabei als Führung für das Zugelement dienen.

Gemäß einem Ausführungsbeispiel der Erfindung ist vorgesehen, dass die Abdrückkraft mittels eines mit dem Betätigungselement verbindbaren Druckelements, insbesondere einer Druckscheibe, und mit mindestens einem mit dem Druckelement verbindbaren Übertragungselement in das erste Klemmelement einleitbar ist. Das Druckelement kann bevorzugt auf der dem Kabel abgewandten Seite des Krafterzeugers angeordnet werden. Das Druckelement und der Krafterzeuger können dabei insbesondere form-, kraft- oder stoffschlüssig miteinander verbunden werden. Als besonders vorteilhaft hat es sich jedoch erwiesen, wenn die Druckscheibe eine Ausnehmung ausweist, in welche der Krafterzeuger und insbesondere eine Kolbeneinheit des Krafterzeugers eingreifen kann. Das Druckelement und insbesondere die Druckscheibe können bevorzugt mehrere Verbindungsstellen aufweisen, an welchen die Übertragungselemente befestigt werden können. Als besonders vorteilhaft hat es sich ferner erwiesen, wenn diese Verbindungsstellen nach Art von Ausnehmungen, wie beispielsweise Langlöchern, ausgebildet sind. Die Längsachse der Langlöcher kann sich dabei insbesondere in radialer Richtung nach außen erstrecken. Auf diese Weise kann auch die Anordnung der Übertragungselemente nach Belieben an einen Kabelaußendurchmesser angepasst werden. Die Übertragungselemente können insbesondere mit Schraubverbindungen oder dergleichen an dem Druckelement fixiert werden. Die Übertragungselemente können bevorzugt nach Art von Stangen ausgebildet sein. Bevorzugt ist, wenn die Übertragungselemente an einer oder beiden Seiten ein Gewinde aufweisen, welches in Eingriff mit einer hierzu korrespondierenden Ausnehmung in dem zweiten Klemmelement und/oder des Druckelements und/oder einer Mutter gelangen kann. Darüber hinaus kann ein Verstärkungselement auf der dem Krafterzeuger abgewandten Seite des Druckelements angeordnet sein. Auf diese Weise kann das Druckelement auch hohen Drücken standhalten. Die bei der Betätigung des Krafterzeugers entstehende Kraft kann bevorzugt über das Druckelement in die Übertragungselemente und über die Übertragungselemente in das erste Klemmelement eingeleitet werden. Es kann eine Abdrückkraft in entgegengesetzter Zugrichtung resultieren. Die Verbindung und insbesondere die Klemmverbindung zwischen den beiden Klemmelementen kann auf diese Weise einfach und zuverlässig gelöst werden.

Bei einem Kabelzugkopf der eingangs erwähnten Art wird die Aufgabe derart **gelöst**, dass dieser ein Montagewerkzeug der bereits beschriebenen Art aufweist. Hierbei ergeben sich dieselben Vorteile, welche bereits im Zusammenhang mit dem Montagewerkzeug beschrieben wurden. Dabei können sämtliche der zuvor beschriebenen Merkmale allein oder in Kombination Anwendung finden.

Eine vorteilhafte Ausgestaltung des Kabelzugkopfes sieht ein Befestigungselement zur Arretierung der miteinander verklemmten Klemmelemente vor. Besonders bevorzugt kann das Befestigungselement nach Art einer Schraubverbindung und insbesondere nach Art einer Kontermutter ausgebildet sein. Das Befestigungselement kann in vorteilhafter Weise auf das erste Klemmelement und insbesondere auf einen Schraubbereich des ersten Klemmelements aufgeschraubt werden. Insoweit ist es möglich, die durch das Montagewerkzeug aufgebrachte Vorspannkraft abzusichern und die Klemmelemente gegeneinander zu arretieren. Auf diese Weise kann sichergestellt werden, dass sich die Klemmverbindung nach dem Lösen des Montagewerkzeugs nicht mehr löst. Bevorzugt weist das Befestigungselement eine scheibenartige Form auf, wobei es besonders bevorzugt ist, wenn der Durchmesser des Befestigungselements dem Durchmesser des zweiten Klemmelements entspricht. Besonders bevorzugt ist ferner, wenn zwischen dem Befestigungselement und dem zweiten Klemmelement zusätzlich eine Unterlegscheibe vorgesehen ist. Auf diese Weise können ggf. ungünstig auswirkende Vorsprünge vermieden werden. Mit Hilfe eines Montagewerkzeugs können so das erste Klemmelement und das zweite Klemmelement gegeneinander verspannt und dann im Anschluss mit dem Befestigungselement gesichert werden. Es ist nicht mehr erforderlich, dass der Spannvorgang über das Befestigungselement selbst aufgebracht wird.

Im Zusammenhang mit der Ausgestaltung des Kabelzugkopfes hat es sich ferner als vorteilhaft erwiesen, wenn das zweite Klemmelement einen äußeren Teil des Kabelzugkopfes und das erste Klemmelement einen inneren Teil des Kabelzugkopfes bildet. Dabei kann das erste Befestigungselement bevorzugt an der Kabelseele und unterhalb des Kabelteils, insbesondere unterhalb der Kabelarmierung, angeordnet werden. Das erste Klemmelement kann hierzu bevorzugt eine Form aufweisen, welche sich aus einer Art Konus und einer mit dem Konus angeordneten Verlängerungsbereich zusammensetzt. Insbesondere kann der Verlängerungsbereich ein Außengewinde aufweisen, welches der Befestigung des Verbindungsteils und/oder des Befestigungselements dienen kann. Das erste Klemmelement kann an der Innenseite eine an die Kontur der Kabelseele angepasste Form aufweisen. Das Kabelteil kann das erste Klemmelement bevorzugt umschließen. Das zweite Klemmelement kann bevorzugt auf das erste Klemmelement aufgeschoben werden, so dass das zweite Klemmelement das erste Klemmelement umgibt. Das Kabelteil, insbesondere die Kabelarmierung, kann sich dann in vorteilhafter Weise zwischen der Außenseite des ersten Klemmelements und der Innenseite des zweiten Klemmelements befinden. Durch eine solche Ausgestaltung der Klemmelemente des Kabelzugkopfes kann eine Befestigung des Kabels auf einfache Art und Weise realisiert werden.

Eine in diesem Zusammenhang bevorzugte Ausgestaltung sieht vor, dass das erste und das zweite Klemmelement zueinander korrespondierend ausgebildet sind. Auf diese Weise können die beiden Klemmelemente auf einfache Art und Weise ineinander gesteckt und miteinander verbunden werden.

Besonders vorteilhaft ist, wenn das erste Klemmelement und/oder das zweite Klemmelement konisch ausgebildete Bereiche, insbesondere konisch ausgebildete Klemmflächen, aufweisen. Durch die konische Ausbildung der beiden Klemmelemente können die Flächen zusätzlich als Führungsflächen dienen. Als besonders vorteilhaft hat es sich dabei erwiesen, wenn sich der konische Bereich des ersten Klemmelements in Zugrichtung verjüngt. Insbesondere können der konische Bereich des ersten Klemmelementes und insbesondere die konisch ausgebildete Klemmfläche an der Außenseite des ersten Klemmelements angeordnet sein. Der konische Bereich und insbesondere die konisch ausgebildete Klemmfläche des zweiten Klemmelements können bevorzugt an der Innenseite des zweiten Befestigungselements angeordnet sein. Auch hier ist es von Vorteil, wenn sich der verjüngende Bereich in Zugrichtung vorne an dem zweiten Klemmelement befindet. Auf diese Weise können sich eine Art Innenkonus und eine Art Außenkonus ergeben, welche ineinander angesteckt werden können. Durch eine solche Ausgestaltung kann sich zwischen den Klemmelementen ein Klemmraum ergeben, in welchem das Kabelteil eingeklemmt werden kann.

Zur Erhöhung der Haltekraft hat sich ferner als vorteilhaft erwiesen, wenn mindestens ein Schneidring zur Verhinderung einer Bewegung des Kabelteils, insbesondere der Kabelarmierung, beim Befestigen in das Kabelteil, insbesondere die Kabelarmierung, einpressbar ist. Insbesondere ist es vorteilhaft, wenn an dem ersten Klemmelement und/oder dem zweiten Klemmelement mindestens ein Schneidring vorgesehen ist. Der Schneidring kann bevorzugt während des Befestigungsvorgangs in das Kabelteil einschneiden und so ein Herausrutschen der Kabelarmierung verhindern. Die zum Einschneiden erforderlichen Kräfte können dabei insbesondere durch die Klemmkraft aufgebracht werden. Je nach Bedarf kann ein Schneidring, insbesondere am ersten Klemmelement und/oder am zweiten Klemmelement, angeordnet sein. Als besonders vorteilhaft hat es sich erwiesen, wenn der größere Durchmesser zu der Seite des Klemmelements zeigt, welche dem Montagewerkzeug zugewandt ist. Insbesondere kann der größere Durchmesser zu dem Gewinde des Verlängerungsbereichs zeigen.

Bei einem Verfahren der eingangs genannten Art wird die Aufgabe dadurch **gelöst**, dass zum Einklemmen bzw. Entklemmen des Kabelteils, insbesondere der Kabelarmierung, die Klemmelemente mittels eines Krafterzeugers gegeneinander bewegt werden. Auch hier ergeben sich die gleichen Vorteile, welche zuvor bereits im Zusammenhang mit dem erfindungsgemäßen Montagewerkzeug sowie dem erfindungsgemäßen Kabelzugkopf beschrieben wurden. Sämtliche der zuvor beschriebenen Merkmale können einzeln oder in Kombination auch zur Durchführung des erfindungsgemäßen Verfahrens Anwendung finden.

Besonders bevorzugt ist, wenn zum Befestigen des Kabelzugkopfes mit einem Montagewerkzeug ein Verfahren mit mindestens den folgenden Schritten durchgeführt wird:
- Freilegen des Kabelteils, insbesondere der Kabelarmierung und/oder der Kabelseele,
- Aufschieben des ersten Klemmelements auf das Kabelteil, insbesondere die Kabelseele,
- Anordnen der Kabelarmierung an der Außenseite des ersten Klemmelements,
- Aufschieben des zweiten Klemmelements auf das erste Klemmelement und insbesondere die Kabelarmierung,
- Anordnen des Befestigungselements an dem ersten Klemmelement,
- Montieren des Verbindungselements,
- Montieren des Greifelements,
- Montieren und Betätigen des Krafterzeugers.

Zum Lösen des Kabelzugkopfes mit einem Montagewerkzeug hat sich insbesondere ein Verfahren umfassend mindestens die folgenden Schritte als vorteilhaft erwiesen:
- Lösen des Befestigungselements,
- Montieren des Krafterzeugers,
- Verbinden der Übertragungselemente mit dem Befestigungselement und/oder dem zweiten Klemmelement,
- Befestigen der Übertragungselemente an dem Druckelement,
- Betätigen des Krafterzeugers.

Weitere Einzelheiten und Vorteile der Erfindung sollen nachfolgend anhand der in den Zeichnungen dargestellten Ausführungsbeispiele näher erläutert werden. Hierin zeigen:
- Fig. 1: eine perspektivische Darstellung eines Kabels mit Kabelzugkopf und mit an dem Kabelzugkopf angeordnetem Montagewerkzeug zum Befestigen des Kabelzugkopfes,
- Fig. 2: eine perspektivische Darstellung des Montagewerkzeugs für den Befestigungsvorgang,
- Fig. 3: eine Schnittdarstellung durch einen Kabelzugkopf mit montiertem Montagewerkzeug,
- Fig. 4: eine perspektivische Darstellung eines Kabels mit Kabelzugkopf und mit an dem Kabelzugkopf angeordnetem Montagewerkzeug zum Lösen des Kabelzugkopfes und
- Fig. 5: eine perspektivische Darstellung des Montagewerkzeugs zum Lösen des Kabelzugkopfes.

Elektrische Kabel 5 und insbesondere Kabel für die Hoch- und Mittelspannungsebene können in vielen Bereichen der Technik Anwendung finden. Entsprechende Kabel 5 dienen dabei im Wesentlichen der Übertragung von Energie. An Land können die Kabel 5 beispielsweise als Erdkabel im Boden oder als Freileitungen auf Masten verlegt werden. Darüber hinaus können entsprechende elektrische Kabel 5 auch als Seekabel ausgestaltet sein und beispielsweise über den Grund von Gewässern verlegt werden.

Zum Verlegen der Kabel 5 werden diese zumeist werksseitig auf Kabeltrommeln gelegt und dann auf einem Transportfahrzeug, wie einem LKW oder einem Schiff, an den späteren Einsatzort transportiert. Zur einfacheren Handhabung derartiger Kabel 5 und insbesondere zur Vereinfachung des Verlegevorgangs werden zumeist Kabelzugköpfe 4 an dem elektrischen Kabel 5 montiert. Dieser Kabelzugkopf 4 kann beispielsweise in der Fertigungsstelle selbst oder später am Einsatzort an dem Kabel 5 montiert werden. Insbesondere bei der Verwendung von Seekabeln mit Armierungsdrähten aus verzinktem Stahl, Aluminium sowie Edelstahl ist die Verwendung eines Kabelzugkopfes 4 von Vorteil.

Der Kabelzugkopf 4 besteht im Allgemeinen aus mehreren Teilelementen, welche im Rahmen des Montage- und Befestigungsvorgangs an dem Kabel 5 befestigt werden können. Ein erstes Teilelement bildet das Befestigungsteil 21, welches ein erstes Klemmelement 2 und ein zweites Klemmelement 3 umfasst. Ein zweites Teilelement wird dann von einem nicht näher dargestellten Zugteil gebildet. Dieser Zugteil kann an dem Befestigungsteil 21 nach dessen Montage angeordnet werden. Der Zugteil kann beispielsweise durch Schrauben oder dergleichen an dem Befestigungsteil 21 befestigt werden. Der Zugteil weist bevorzugt eine kegelförmige Form auf, welcher an der Spitze eine Öse aufweist, in welche beispielsweise ein Zughaken oder dergleichen angeordnet werden kann. Zum Verlegen des Kabels 5 kann der Zughaken dann beispielsweise mit Hilfe einer Winde oder einem anderen mechanischen Zugmittel gegriffen und das Kabel durch Zug an dem Kabelzugkopf 4 verlegt werden.

Zum Befestigen des Befestigungsteils 21 ist es erforderlich, die Klemmelemente 2, 3 fest an dem Kabel 5 anzuordnen. Hierzu sind Ausgestaltungen bekannt, bei welchen zwischen den Klemmelementen 2, 3 ein Kabelteil 6 und insbesondere eine Kabelarmierung 7 eingeklemmt wird. Bei bekannten Kabelzugköpfen 4 erfolgt die Befestigung der Klemmelemente 2, 3 im Allgemeinen durch eine manuelle Tätigkeit. Hierzu kann die zum Klemmen notwendige Kraft, beispielsweise über eine Mutter oder dergleichen, aufgebracht werden. Allerdings war es hierdurch nur möglich, geringe Drehmomente aufzubringen, so dass die Kabelzugköpfe 4 nicht für eine hohe Zuglast für einen längeren Zeitraum verwendet werden können.

Um nun Kabelzugköpfe 4 realisieren zu können, welche auch für hohe Zuglasten verwendet werden können und dass auch über einen längeren Zeitraum, ist bei einem erfindungsgemäßen Montagewerkzeug 1 vorgesehen, dass zum Einklemmen bzw. Entklemmen des Kabelteils 6 und insbesondere der Kabelarmierung 7 die Klemmelemente 2, 3 mittels eines Krafterzeugers 8 gegeneinander bewegt werden können. Auf diese Weise können bei beliebigen Kabeln 5 die benötigten Vorspannkräfte bzw. Abdrückkräfte aufgebracht werden. So kann gleichzeitig ein fester Sitz der Armierungsdrähte der Kabelarmierung 7 gewährleistet, aber auch eine hohe Zuglast realisiert werden.

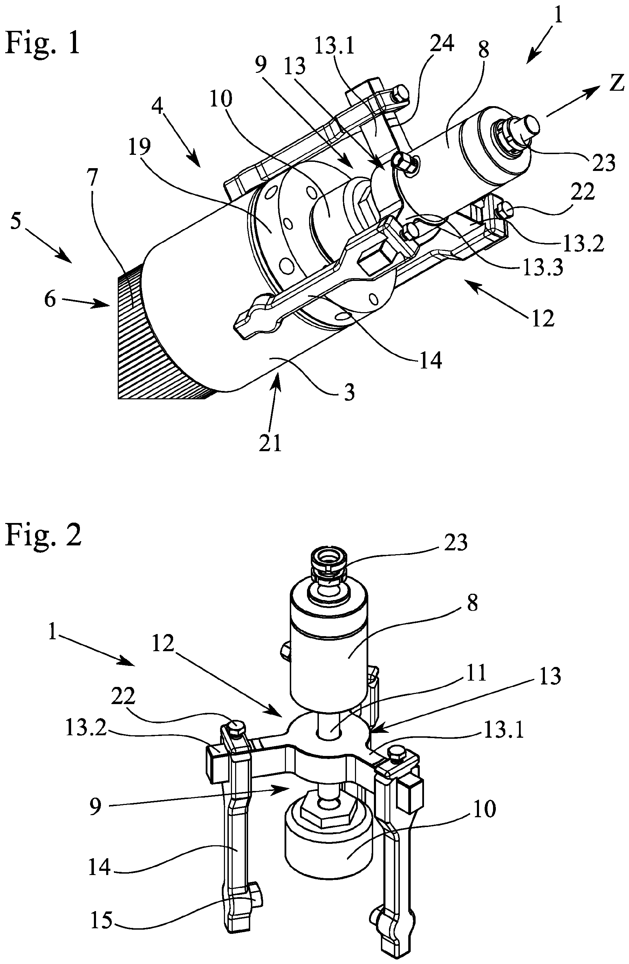

In der Fig. 1 ist ein solches erfindungsgemäßes Montagewerkzeug 1 dargestellt, welches zum Befestigen und/oder Lösen eines ein erstes Klemmelement 2 und ein zweites Klemmelement 3 aufweisenden Kabelzugkopfes 4 an bzw. von einem elektrischen Kabel 5, insbesondere einem Seekabel, dienen kann. Dabei zeigt die Darstellung in der Fig. 1 insbesondere den Zustand des Montagewerkzeugs 1, welcher dem Befestigen dienen kann.

Wie dies in der Darstellung in Fig. 1 zu erkennen ist, wird das Montagewerkzeug 1 zum Befestigen bzw. Lösen des Kabelzugkopfes 4 an diesem montiert. Hierzu kann das Montagewerkzeug 1 zum einen mit dem ersten Klemmelement 2 und zum anderen mit dem zweiten Klemmelement 3 verbunden werden, um so mittels des Krafterzeugers die zum Befestigen erforderliche Vorspannkraft bzw. zum Lösen erforderliche Abdrückkraft in die Klemmelemente 2, 3 einzuleiten. Auf diese Weise ist ein Befestigen bzw. Lösen auf einfache Art und Weise möglich, unter gleichzeitiger Erhöhung der Zugkraft über einen längeren Zeitraum. Entsprechend befestigte Kabelzugköpfe 4 können beispielsweise für eine Zugkraft von mehr als 60 t für 30 Minuten ausgebildet sein. Eine solche Erhöhung der Zugkraft ist mittels manueller Tätigkeit nicht möglich.

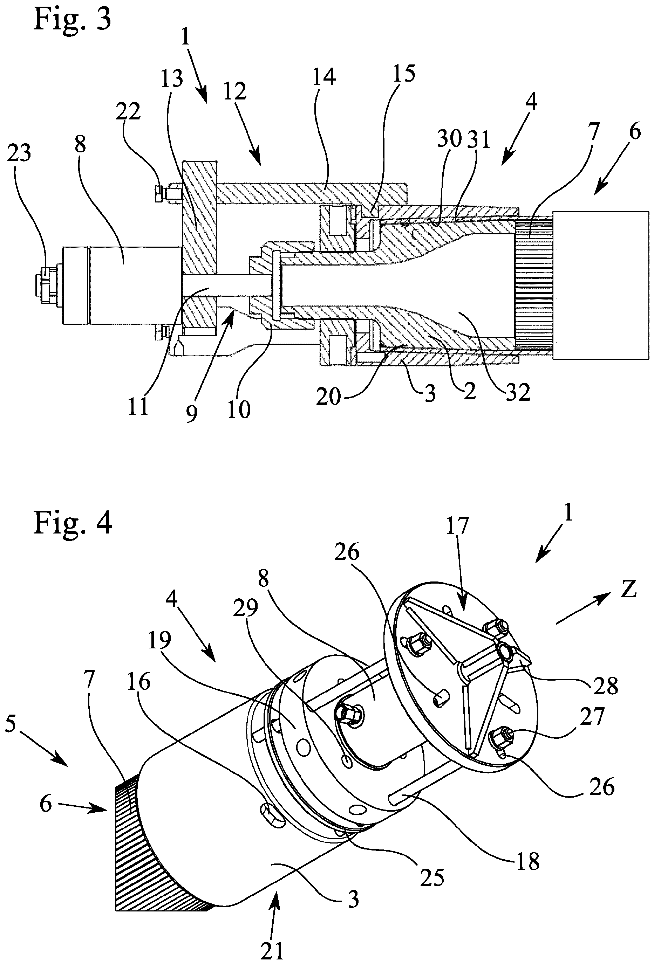

Der Kabelzugkopf 4 und insbesondere das Befestigungsteil 21 umfasst ein erstes Klemmelement 2 sowie ein zweites Klemmelement 3, zwischen denen ein Kabelteil 6 und insbesondere eine Kabelarmierung 7 eingeklemmt werden kann. Das erste Klemmelement 2 befindet sich im Inneren des Kabelzugkopfes 4 und insbesondere an der dem Kabel 5 zugewandten Seite, vgl. hierzu auch die Darstellung in Fig. 3. Das erste Klemmelement 2 ist nach Art eines sich in Zugrichtung Z verjüngenden Innenkonus ausgebildet. Das erste Klemmelement 2 weist einen konischen Bereich 31 und insbesondere eine konische Klemmfläche 31 auf. Der konische Bereich 31 kann bevorzugt an der Außenseite des ersten Klemmelements 2 angeordnet sein. Je nach Bedarf kann die Klemmfläche 31 eben oder konturiert ausgestaltet sein. Es hat sich jedoch als vorteilhaft erwiesen, wenn an der Klemmfläche 31 ein oder mehrere Schneidringe 20 vorgesehen sind, welche in die Kabelarmierung 7 des Kabels 5 beim Befestigen einschneiden können. Mit Hilfe des Schneidrings 20 kann ein Verrutschen der Kabelarmierung 7 verhindert werden. An der Innenseite ist das erste Klemmelement 2 an die Kontur der Kabelseele 32 des Kabels 5 angepasst. Das erste Klemmelement 2 kann beispielsweise aus einem Metall oder dergleichen hergestellt sein.

Neben dem ersten Klemmelement 2 bildet das zweite Klemmelement 3 einen weiteren Teil des Befestigungsteils 21 des Kabelzugkopfes 4. Wie dies ebenfalls der Fig. 3 zu entnehmen ist, weist das zweite Klemmelement 3 eine zu dem ersten Klemmelement 2 korrespondierende Form auf. Auch das zweite Klemmelement 3 weist einen konischen Bereich 30 und insbesondere eine konisch ausgebildete Klemmfläche 30 auf. Diese ist bei dem zweiten Klemmelement 3 an der Innenseite angeordnet. Auch das zweite Klemmelement 3 kann beispielsweise aus einem metallischen Material hergestellt sein. Dabei ist es besonders bevorzugt, wenn die beiden Klemmelemente 2, 3 aus dem gleichen Material hergestellt sind. Auch an der Klemmfläche 30 des zweiten Klemmelements 3 kann bei Bedarf ein Schneidring 20 angeordnet sein, um so eine Bewegung des Kabels 5 zu verhindern. Insbesondere kann mit Hilfe des Schneidrings 20 ein Herausrutschen der Kabelarmierung 7 verhindert werden.

Der Aufbau des Montagewerkzeugs 1 gemäß dem vorliegenden Ausführungsbeispiel für den Befestigungsvorgang soll nachfolgend anhand der Darstellungen in Fig. 2 näher erläutert werden. Wie dies die Darstellung in Fig. 2 zeigt, weist das Montagewerkzeug 1 für den Befestigungsvorgang einen Krafterzeuger 8, ein Verbindungselement 9 sowie ein Greifelement 12 auf, wobei insbesondere das Verbindungselement 9 mit dem ersten Klemmelement 2 und das Greifelement 12 mit dem zweiten Klemmelement 3 verbindbar ist.

Der Krafterzeuger 8 ist im vorliegenden Ausführungsbeispiel insbesondere als ein hydraulischer Krafterzeuger 8 und insbesondere als hydraulischer Zylinder 8 ausgebildet. Jedoch sind auch Ausgestaltungen denkbar, bei welchen der Krafterzeuger 8 beispielsweise als pneumatischer Krafterzeuger 8 und insbesondere als pneumatischer Zylinder ausgebildet ist. Mittels eines solchen Krafterzeugers 8 kann eine gradlinige Kraft in die Klemmelemente 2, 3 eingeleitet werden. Der Krafterzeuger 8 kann insbesondere mittels einer Mutter oder dergleichen gesichert werden.

Zur Verbindung des Krafterzeugers 8 mit dem ersten Klemmelement 2 des Kabelzugkopfes 4 ist gemäß dem vorliegenden Ausführungsbeispiel ein Verbindungselement 9 vorgesehen, welches vorliegend eine Verbindungsmutter 10 sowie ein Zugelement aufweist. Das Zugelement 11 ist dabei einerseits mit dem Krafterzeuger 8 und auf der anderen Seite mit der Verbindungsmutter 10 bzw. dem ersten Klemmelement 2 verbindbar. Die Verbindungsmutter 10 kann bevorzugt auf das erste Klemmelement 2 aufgeschraubt werden. Das erste Klemmelement 2 kann hierzu ein Außengewinde aufweisen, welches in das Innengewinde der Verbindungsmutter 10 eingreifen kann. Über das Verbindungselement 9 kann das erste Klemmelement 2 lösbar mit dem Krafterzeuger 8 verbunden werden. Durch die Verbindung des ersten Klemmelements 2 über das Verbindungselement 9 mit dem Krafterzeuger 8 kann eine axiale Kraft erzeugt werden, welche insbesondere zum Befestigen in Zugrichtung Z wirken kann. Im Falle des Lösens der Befestigung kann eine axiale Kraft entgegen der Zugrichtung Z erzeugt werden.

An dem Verbindungselement 9 ist wiederum ein Greifelement 12 angeordnet, welches dem Greifen des zweiten Klemmelements 3 dienen kann. Das Greifelement 12 weist einen Ausleger 13 auf sowie mindestens ein an dem Ausleger 13 angeordnetes Greifteil 14. Vorliegend ist, wie dies auch beispielsweise Fig. 2 im Detail zeigt, der Ausleger 13 im Wesentlichen von sternenförmiger Geometrie. Der Ausleger 13 weist insgesamt drei Auslegerarme 13.1, 13.2,13.3 auf, welche sich in radialer Richtung nach außen erstrecken. Die einzelnen Auslegerarme 13.1, 13.2, 13.3 sind dabei äquidistant angeordnet. Vorliegend weist der Ausleger 13 insgesamt drei Auslegerarme 13.1, 13.2, 13.3. auf. Alternativ kann jedoch auch eine andere Anzahl von Auslegerarmen 13.1, 13.2, 13.3 vorgesehen sein. Eine Ausgestaltung mit drei Auslegerarmen 13.1, 13.2, 13.3 hat sich jedoch insbesondere im Hinblick auf die Stabilität und das Gewicht des Montagewerkzeugs 1 als vorteilhaft erwiesen. An den Auslegerarmen 13.1, 13.2, 13.3 des Auslegers 13 ist wiederum jeweils ein Greifteil 14 angeordnet. Das Greifteil 14 weist eine im Wesentlichen längliche Form auf, wobei an einem Ende des Greifteils 14 eine Einschuböffnung vorgesehen ist, in welcher der jeweilige Auslegerarm 13.1, 13.2, 13.3 des Auslegers 13 eingreifen kann. Auf diese Weise ist das Greifteil 14 in radialer Richtung verschiebbar an dem Ausleger 13 angeordnet. Darüber hinaus ist das Greifteil 14, insbesondere in radialer Richtung, auch festlegbar. Hierzu ist eine Fixiervorrichtung 22 vorgesehen, welche vorliegend insbesondere als eine Schraubverbindung ausgebildet ist. Die Fixiervorrichtung 22 greift dabei in die Oberseite des Greifteils 14 ein. Durch Drehung an der Schraube 22 kann das Greifteil 14 dann an dem Ausleger 13 fixiert werden. Wie dies ferner die Fig. 1 oder 2 zeigen, sind an dem Ausleger 13 Markierungen 24 vorgesehen, welche jeweils angeben, welche Einstellungsposition für einen bestimmten Außendurchmesser eines Kabels 5 geeignet ist.

An der entgegengesetzten Seite weist das Greifteil 14 einen Vorsprung 15 auf, welcher in eine an den zweiten Klemmelement 3 vorgesehene Eingriffsöffnung 16 während des Greifvorgangs eingreifen kann. Die Eingriffsöffnung 16 ist, wie dies beispielsweise die Darstellung in Fig. 2 zeigt, nach Art eines Langlochs 16 ausgebildet. Der Vorsprung 15 weist wiederum eine hierzu korrespondierende Form auf. Ein sich in Eingriff befindlicher Vorsprung 15 mit einer Eingriffsöffnung 16 zeigt beispielhaft Fig. 3 in der Schnittdarstellung. Durch die Verbindung des Greifelements 12 mit dem zweiten Klemmelement 3 über den Vorsprung 15 sowie die Verschiebung und/oder Festlegung des Greifteils 14 an dem Ausleger 13 kann das Montagewerkzeug 1 auf einfache Weise gegenüber dem Kabelzugkopf 4 festgelegt werden. Als zusätzliche Sicherung kann darüber hinaus eine Gurtsicherung oder gleichen, wie beispielsweise eine Spanngurtsicherung, vorgesehen sein, welche von außen um die Greifteil 14 gelegt und festgezurrt werden kann. Auf diese Weise kann das Montagewerkzeug 1 zusätzlich gegen ein Verrutschen und/oder ein Abrutschen gesichert werden.

Das Greifelement 12 ist insbesondere an dem Verbindungselement 9 angeordnet. Der Ausleger 13 weist hierzu eine Öffnung auf, durch welche das Zugelement 11 hindurchgesteckt werden kann. Auf diese Weise kann die Position des Greifelements 12 in Bezug auf das Verbindungselement 9 relativ festgelegt werden.

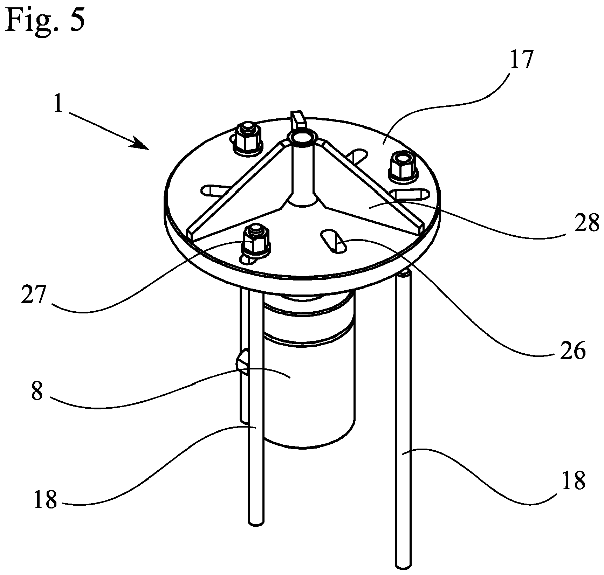

Für den Lösevorgang kann alternativ oder zusätzlich ein Druckelement 17 an dem Krafterzeuger 8 angeordnet werden. Ein entsprechendes Ausführungsbeispiel zeigen beispielsweise Fig. 4 und 5. Auf diese Weise kann die Abdrückkraft, insbesondere über das Druckelement 17 sowie über mindestens ein Übertragungselement 18, in das erste Klemmelement 2 eingeleitet werden. Das Druckelement 17 kann insbesondere auf der dem Kabel 5 abgewandten Seite des Krafterzeugers 8 und insbesondere in Zugrichtung Z vorne angeordnet sein. Das Druckelement 17 kann dabei insbesondere mit dem Krafterzeuger 8 in Eingriff gelangen, insbesondere über den Kolben 23 des Krafterzeugers 8.

Wie dies beispielsweise die Fig. 4 oder 5 im Detail zeigen, ist das Druckelement 17 nach Art einer Druckscheibe 17 ausgebildet. Die Druckscheibe 17 weist zum einen Ausnehmungen 26 auf, über welche die Übertragungselemente 18 mit dem Druckelement 17 verbunden werden können. Die Ausnehmungen 26 sind nach Art von Langlöchern ausgeführt, so dass eine radiale Verschiebung und/oder Festlegung der Übertragungselemente 18 möglich ist. Auf diese Weise kann eine Anpassung an dem Außendurchmesser des Kabels 5 bzw. an dem Außendurchmesser des Klemmelements 3 erfolgen. Die Übertragungselemente 18 sind über Fixierelemente 27, wie beispielsweise über Schraubverbindungen oder dergleichen, an dem Druckelement 17 festlegbar. Die Übertragungselemente 18 sind vorliegend nach Art von Stangen ausgebildet, welche einerseits mit dem Druckelement 17 und auf der anderen Seite mit dem zweiten Klemmelement 3 in Eingriff gelangen können. Das zweite Klemmelement 3 kann hierzu bevorzugt nicht näher dargestellte Ausnehmungen aufweisen, insbesondere Gewindebohrungen, in welchen die Übertragungselemente 18 eingeschraubt werden können. Um das Druckelement 17 zusätzlich gegen Beschädigungen zu schützen, ist ein Verstärkungselement 28 an der Oberseite der Druckscheibe 17 vorgesehen, so dass auch hohe Kräfte übertragen werden können.

Zunächst soll nun anhand der Fig. 1 ein exemplarischer Befestigungsvorgang eines Kabelzugkopfes 4 an einem elektrischen Kabel 5 näher erläutert werden.

Zum Anordnen des Kabelzugkopfes 4 an dem elektrischen Kabel 5 und insbesondere an einem Seekabel 5 kann ein Kabelteil 6 und insbesondere die Kabelarmierung 7 des Kabels 5 zwischen dem ersten Klemmelement 2 und dem zweiten Klemmelement 3 eingeklemmt werden. Hierzu kann in einem Verfahren zum Befestigen eines Kabelzugkopfes 4 mit einem Montagewerkzeug 1 die folgenden Schritte durchgeführt werden:
- Freilegen des Kabelteils 6, insbesondere der Kabelarmierung 7 und/oder der Kabelseele 32,
- Aufschieben des ersten Klemmelements 2 auf das Kabelteil 6, insbesondere die Kabelseele 32,
- Anordnen der Kabelarmierung 7 an der Außenseite des ersten Klemmelements 2,
- Aufschieben des zweiten Klemmelements 3 auf das erste Klemmelement 2 und insbesondere die Kabelarmierung 7,
- Anordnen des Befestigungselements 19 an dem ersten Klemmelement 2,
- Montieren des Verbindungselements 9,
- Montieren des Greifelements 12,
- Montieren und Betätigen des Krafterzeugers 8.

Insbesondere können im Zuge des Verfahrens zur Befestigung eines Kabelzugkopfes 4 die Kabelisolierung sowie ggf. weitere Leit- und Isolierschichten von dem Kabel 5 entfernt und die Kabelarmierung 7 sowie die Kabelseele 32 des Kabels 5 freigelegt werden. Danach kann das erste Klemmelement 2 auf die Kabelseele 32 des Kabels 5 aufgeschoben werden. Das erste Klemmelement 2 kann hierzu an der Vorderseite, d. h. in Zugrichtung Z vorne, eine Öffnung, insbesondere einen Verlängerungsbereich, aufweisen, durch welche die Kabelseele 32 des Kabels 5 hindurchgezogen werden kann. In einem nächsten Schritt kann dann die Kabelarmierung 7 um die Außenseite des ersten Klemmelements 2 gelegt werden, insbesondere derart, dass der konische Bereich 31 des ersten Klemmelements 2 vollständig von der Kabelarmierung 7 umgeben ist. Die Kabelarmierung 7 umgibt dann das erste Klemmelement 2 gleichmäßig ringsum. Dabei ist insbesondere darauf zu achten, dass die einzelnen Armierungsdrähte der Kabelarmierung 7 gleichmäßig auf der Klemmfläche 31 aufliegen. Bei Bedarf kann die Kabelarmierung 7 zusätzlich fixiert werden, beispielsweise mit einem Klebestreifen oder dergleichen.

In einem nächsten Schritt kann dann das zweite Klemmelement 3 auf das erste Klemmelement 2 und insbesondere über die Kabelarmierung 7 geschoben werden. Das erste Klemmelement 2 und das zweite Klemmelement 3 können dann ineinander gesteckt und formschlüssig und/oder kraftschlüssig miteinander verbunden werden. Insbesondere können die beiden Klemmelement 2, 3 miteinander verklemmt werden.

In einem nächsten Schritt kann dann ein Befestigungselement 19 an dem ersten Klemmelement 2 angeordnet werden. Hierbei kann es sich beispielsweise um eine nach Art einer Scheibe ausgebildete Kontermutter handeln, welche die Klemmverbindung nach dem Befestigen zusätzlich sichert. Das Befestigungselement 19 kann dabei insbesondere im angezogenen Zustand an dem zweiten Klemmelement 3 anliegen. Der Durchmesser des Befestigungselements 19 entspricht dabei dem Außendurchmesser des zweiten Klemmelements 3. Je nach Bedarf kann zwischen dem zweiten Klemmelement 3 und dem Befestigungselement 19 noch eine Unterlegscheibe 25 vorgesehen sein. Nachdem das Befestigungselement 19 an dem ersten Klemmelement 2, insbesondere in dem Verlängerungsbereich mit dem Außengewinde, angeordnet wurde, kann das Befestigungselement 19 lose per Hand angezogen werden. Dies ist jedoch nicht zwingend erforderlich. Das Befestigungselement 19 kann beispielsweise nach Art einer Kontermutter ausgebildet sein, welche nach dem Betätigen des Krafterzeugers 8 festzogen werden kann, um so die Klemmverbindung zwischen den Klemmelementen 2, 3 zusätzlich zu sichern.

Zur Befestigung und insbesondere zum Klemmen der beiden Klemmelemente 2, 3 und insbesondere zum Einklemmen der Kabelarmierung 7 zwischen den beiden Klemmelementen 2, 3 kann dann das Montagwerkzeug 1 an dem Befestigungsteil 21 angeordnet werden. Zunächst kann hierzu das Verbindungselement 9, insbesondere mit der Verbindungsmutter 10 und dem Zugelement 11, an dem ersten Klemmelement 2 montiert werden. In einem nächsten Schritt kann dann das Greifelement 12 montiert werden. Schließlich wird der Krafterzeuger 8 montiert und betätigt.

Bei der Betätigung des Krafterzeugers 8 werden Vorspannkräfte in die Klemmelemente 2, 3 eingeleitet. Insbesondere kann auf das erste Klemmelement 2 eine axiale Kraft in Zugrichtung Z aufgebracht werden, welche die Kabelseele 32 in Zugrichtung Z zieht. Insbesondere kann durch das Greifelement 12 wiederum eine axiale Kraft erzeugt werden, welche der axialen Kraft des ersten Klemmelements 2 entgegengesetzt wirkt und auf das zweite Klemmelement 3 aufgebracht wird. Auf diese Weise sind die beiden Klemmelemente 2, 3 gegeneinander bewegbar, so dass sich eine Klemmverbindung ergibt, wobei die Kabelarmierung 7 zwischen den Klemmelementen 2, 3 eingeklemmt wird. Insbesondere ist es bevorzugt, wenn die konisch ausgebildeten Bereiche des ersten Klemmelements 2 und/oder des zweiten Klemmelements 3 und insbesondere die konisch ausgebildeten Klemmflächen gegeneinander verklemmt werden, so dass dann das Kabelteil 5 und insbesondere die Kabelarmierung 7 zwischen dem ersten Klemmelement 2 und dem zweiten Klemmelement 3 eingeklemmt werden.

Nach der Betätigung des Krafterzeugers 8 kann dann das Befestigungselement 19 angezogen und so die Klemmverbindung gesichert werden. Anschließend kann das Montagewerkzeug 1 von dem Befestigungsteil 21 abgenommen und beispielsweise durch einen Zugteil ersetzt werden.

Zum Lösen eines Kabelzugkopfes 4 von einem Kabel 5 mit einem Montagewerkzeug 1 können wiederum die folgenden Schritte durchgeführt werden:
- Lösen des Befestigungselements 19,
- Montieren des Krafterzeugers 8,
- Verbinden der Übertragungselemente 18 mit dem Befestigungselement 19 und/oder dem zweiten Klemmelement 3,
- Befestigen der Übertragungselemente 18 an dem Druckelement 17,
- Betätigen des Krafterzeugers 8.

Insbesondere kann zum Lösen des Kabelzugkopfs 4 der Krafterzeuger 8 zum Lösen der Verbindung verwendet werden. Hierzu kann zunächst das Befestigungselement 19 gelöst werden, so dass die Klemmverbindung nicht mehr vollständig gesichert ist. Danach können die Übertragungselemente 18 an dem zweiten Klemmelement 3 befestigt werden. Hierzu können am Befestigungselement 19 und bei Bedarf auch in der Unterlegscheibe 15 Durchführungen 29 vorgesehen sein, durch welche die Übertragungselemente 18 hindurchgesteckt werden können. Anschließend kann dann das Druckelement 17 mit den Übertragungselementen 18 verbunden und dort mittels Fixierelementen 27 fixiert werden. Durch die Betätigung des Krafterzeugers 8 wird auch hier eine axiale Kraft erzeugt. Insbesondere wird eine Abdrückkraft erzeugt, welche über die Druckelemente 17 und die Übertragungselemente 18 eine axiale Kraft erzeugt, welche eine Bewegung des zweiten Klemmelements 3 in Zugrichtung Z und eine entgegengesetzte Kraft des ersten Klemmelements 2 in entgegengesetzter Zugrichtung Z ermöglicht. Hierdurch wird die Klemmverbindung gelöst und die beiden Klemmelemente 2, 3 auseinandergeschoben.

Mit einem erfindungsgemäßen Montagewerkzeug 1 kann ein Kabelzugkopf 4 mit einem ersten Klemmelement 2 und einem zweiten Klemmelement 3 auf einfache Art und Weise an einem elektrischen Kabel 5 befestigt werden. Insbesondere kann ein Kabelteil 6 und eine Kabelarmierung 7 zwischen den Klemmelementen 2, 3 eingeklemmt werden. Durch das Montagewerkzeug 1 können zum Einklemmen bzw. Entklemmen des Kabelteils 6, insbesondere der Kabelarmierung 7, die Klemmelemente 2, 3 gegeneinander bewegt werden. Insoweit ist zum Befestigen eine Vorspannkraft bzw. zum Lösen eine Abdrückkraft mittels des Krafterzeugers 8 in die Klemmelemente 2, 3 einleitbar. Auf diese Weise kann ein Kabelzugkopf 4 realisiert werden, welcher auch für hohe Zugkräfte über einen längeren Zeitraum eingesetzt werden kann. Mit Hilfe eines erfindungsgemäßen Montagewerkzeugs 1 ist eine einfache Montage des Kabelzugkopfs 4 bei gleichzeitiger Sicherstellung einer hohen Zuglast möglich. Darüber hinaus kann ein Verrutschen der Kabelarmierung 7 verhindert werden.

### Bezugszeichen:

- 1: Montagewerkzeug
- 2: erstes Klemmelement
- 3: zweites Klemmelement
- 4: Kabelzugkopf
- 5: elektrisches Kabel
- 6: Kabelteil
- 7: Kabelarmierung
- 8: Krafterzeuger
- 9: Verbindungselement
- 10: Verbindungsmutter
- 11: Zugelement
- 12: Greifelement
- 13: Ausleger
- 13.1: Auslegerarm
- 13.2: Auslegerarm
- 13.3: Auslegerarm
- 14: Greifteil
- 15: Vorsprung
- 16: Eingriffsöffnung
- 17: Druckelement
- 18: Übertragungselement
- 19: Befestigungselement
- 20: Schneidring
- 21: Befestigungsteil
- 22: Fixierelement
- 23: Kolben
- 24: Markierung
- 25: Unterlegscheibe
- 26: Ausnehmung
- 27: Fixierelement
- 28: Verstärkungselement
- 29: Durchführung
- 30: Klemmfläche des zweiten Klemmelements
- 31: Klemmfläche des ersten Klemmelements
- 32: Kabelseele

- Z: Zugrichtung

## Patentansprüche

1. Montagewerkzeug zum Befestigen und/oder Lösen eines ein erstes Klemmelement (2) und ein zweites Klemmelement (3) aufweisenden Kabelzugkopfes (4) an bzw. von einem elektrischen Kabel (5), insbesondere einem Seekabel, wobei zwischen den Klemmelementen (2, 3) ein Kabelteil (6), insbesondere eine Kabelarmierung (7), einklemmbar ist,
**dadurch gekennzeichnet,**
**dass** zum Einklemmen bzw. Entklemmen des Kabelteils (6), insbesondere der Kabelarmierung (7), die Klemmelemente (2, 3) mittels eines Krafterzeugers (8) gegeneinander bewegbar sind.

2. Montagewerkzeug nach Anspruch 1, **dadurch gekennzeichnet, dass** zum Befestigen eine Vorspannkraft bzw. zum Lösen eine Abdrückkraft mittels des Krafterzeugers (8) in die Klemmelemente (2, 3) einleitbar ist.

3. Montagewerkzeug nach einem der vorhergehenden Ansprüche, **dadurch gekennzeichnet, dass** der Krafterzeuger (8) als hydraulischer oder pneumatischer Krafterzeuger (8), insbesondere als ein hydraulischer oder pneumatischer Zylinder, ausgebildet ist.

4. Montagewerkzeug nach einem der vorhergehenden Ansprüche, **gekennzeichnet durch** ein Verbindungselement (9) insbesondere zur lösbaren Verbindung des ersten Klemmelements (2) mit dem Krafterzeuger (8).

5. Montagewerkzeug nach Anspruch 4, **dadurch gekennzeichnet, dass** das Verbindungselement (9) eine Verbindungsmutter (10) und/oder ein Zugelement (11) aufweist.

6. Montagewerkzeug nach einem der vorhergehenden Ansprüche, **gekennzeichnet durch** ein Greifelement (12) zum Greifen des zweiten Klemmelements (3).

7. Montagewerkzeug nach Anspruch 6, **dadurch gekennzeichnet, dass** das Greifelement (12) einen Ausleger (13) und mindestens ein an dem Ausleger (13) angeordnetes Greifteil (14) aufweist.

8. Montagewerkzeug nach Anspruch 7, **dadurch gekennzeichnet, dass** das mindestens eine Greifteil (14) in radialer Richtung verschiebbar und/oder festlegbar an dem Ausleger (13) angeordnet ist.

9. Montagewerkzeug nach einem der Ansprüche 4 bis 8, **dadurch gekennzeichnet, dass** das Greifelement (12) an dem Verbindungselement (9) anordbar ist.

10. Montagewerkzeug nach einem der Ansprüche 2 bis 9, **dadurch gekennzeichnet, dass** die Abdrückkraft mittels eines mit dem Krafterzeuger (9) verbindbaren Druckelements (17), insbesondere einer Druckscheibe, und mit mindestens einem mit dem Druckelement (17) verbindbaren Übertragungselement (18) in das erste Klemmelement (2) einleitbar ist.

11. Kabelzugkopf mit einem Montagewerkzeug (1) nach einem der vorhergehenden Ansprüche.

12. Kabelzugkopf nach Anspruch 11, **gekennzeichnet durch** ein Befestigungselement (19) zur Arretierung der miteinander verklemmten Klemmelemente (2, 3).

13. Kabelzugkopf nach einem der Ansprüche 11 oder 12, **dadurch gekennzeichnet, dass** das zweite Klemmelement (3) einen äußeren Teil des Kabelzugkopfes (4) und das erste Klemmelement (2) einen inneren Teil des Kabelzugkopfes (4) bildet.

14. Kabelzugkopf nach einem der Ansprüche 11 bis 13, **dadurch gekennzeichnet, dass** ein Schneidring (20) zur Verhinderung einer Bewegung des Kabelteils (6), insbesondere der Kabelarmierung (7), beim Befestigen in das Kabelteil (6), insbesondere in die Kabelarmierung (7), einpressbar ist.

15. Verfahren zum Befestigen und/oder Lösen eines ein erstes Klemmelement (2) und ein zweites Klemmelement (3) aufweisenden Kabelzugkopfes (4) mit einem Montagewerkzeug (1) an bzw. von einem elektrischen Kabel (5), insbesondere einem Seekabel, wobei zwischen den Klemmelementen (2, 3) ein Kabelteil (6), insbesondere eine Kabelarmierung (7), eingeklemmt wird,
**dadurch gekennzeichnet,**
**dass** zum Einklemmen bzw. Entklemmen des Kabelteils (6), insbesondere der Kabelarmierung (7), die Klemmelemente (2, 3) mittels eines Krafterzeugers (8) gegeneinander bewegt werden.
